# EUROPÄISCHE PATENTSCHRIFT

(11) **EP 1 460 467 B1**
(45) Veröffentlichungstag und Bekanntmachung des Hinweises auf die Patenterteilung: **19.07.2006**
(21) Anmeldenummer: 03104663.4
(22) Anmeldetag: 12.12.2003
(51) Int. Cl.: G02B 21/24

(54) **Tubus zur Adaption an ein Mikroskop**
Tube for adapting to a microscope
Tube pour adaptation sur un microscope

(30) Priorität: 07.01.2003 DE 10300456
(43) Veröffentlichungstag der Anmeldung: 22.09.2004
(73) Patentinhaber: Leica Microsystems CMS GmbH, 35578 Wetzlar (DE)
(72) Erfinder: HUND, Andreas, 37130, Gleichen-Reinhausen (DE); PAUSCH, Armin, 35641, Schöffengrund (DE); EUTENEUER, Peter, 35633, Lahnau (DE)
(74) Vertreter: Reichert, Werner Franz

(56) Entgegenhaltungen:
- US-A- 5 764 408
- US-A1- 2001 030 801
- PATENT ABSTRACTS OF JAPAN Bd. 0111, Nr. 62 (P-579), 26. Mai 1987 (1987-05-26) & JP 61 294408 A (NIPPON KOGAKU KK <NIKON>), 25. Dezember 1986 (1986-12-25)

## Beschreibung

Die vorliegende Erfindung betrifft einen Tubus zur Adaption an ein Mikroskop, mit einem Tubusgehäuse, einer Adaptionsschnittstelle, einer Strahlumlenkeinheit, weiteren Strahlführungsmitteln und einer Bedienerschnittstelle, wobei mit der Strahlumlenkeinheit ein von der Adaptionsschnittstelle kommender Lichtstahl derart umlenkbar ist, dass seine optische Achse zumindest bereichsweise im Wesentlichen in einer vorgegebenen Ebene verläuft und von den weiteren Strahlführungsmitteln zu der Bedienerschnittstelle führbar ist.

Tuben der gattungsbildenden Art sind seit geraumer Zeit aus dem Stand der Technik bekannt. Lediglich beispielhaft wird auf die US 2001/00 30 801 A1 verwiesen, aus der ein Tubus der gattungsbildenden Art bekannt ist. Bei diesem Tubus handelt es sich um einen sogenannten Ergonomietubus, bei dem nämlich die Bedienerschnittstelle - der den Augen eines Bedieners zugewandten Teil des Tubus, üblicherweise die Okulare - drehbar angeordnet ist. Durch die drehbare Anordnung der Bedienerschnittstelle ist eine individuelle Anpassung des Tubus an einen Bediener des Mikroskops derart möglich, dass beispielsweise die Okulare des Tubus auf einem Kreisbogen bewegt werden können. Hierdurch kann die Einblickhöhe in den Mikroskoptubus eingestellt werden, wobei aufgrund der drehbar angeordneten Bedienerschnittstelle eine Veränderung der horizontalen Okularposition gleichzeitig eine Veränderung der vertikalen Okularposition einhergeht.

Jeder Mikroskopbediener nimmt üblicherweise eine für ihn akzeptable Position zum Mikroskop ein. So ist der Abstand mancher Mikroskopbediener zum Mikroskop relativ klein, der Abstand anderer Mikroskopbediener zum Mikroskop verglichen hierzu jedoch relativ groß. Dies kann unter anderem von der Armlänge des Mikroskopbedieners abhängen. Mit dem aus der US 2001/00 30 801 A1 bekannten Mikroskoptubus kann ein Mikroskopbediener zwar die Einblickhöhe variieren, jedoch verändert sich hierbei auch gleichzeitig der Einblickwinkel für den Bediener, so dass dieser unterschiedliche Kopfneigungen bei unterschiedlichen Drehwinkelstellungen der Bedienerschnittstelle einnehmen muss. Ein ergonomisches arbeiten mit dem Mikroskop ist daher nur sehr eingeschränkt möglich. Eine Variation des Abstands von Mikroskop zu Bediener ist ohne eine Variation des Einblickwinkels mit dem aus der US 2001/00 30 801 A1 bekannten Mikroskoptubus nicht möglich.

Der vorliegenden Erfindung liegt daher die Aufgabe zugrunde, einen Tubus der gattungsbildenden Art anzugeben und weiterzubilden, bei dem der Abstand von der Bedienerschnittstelle zum Mikroskop in einer vorgegebenen Richtung unter Beibehaltung des Einblickwinkels verändert werden kann.

Der erfindungsgemäße Tubus der gattungsbildenden Art löst die voranstehende Aufgabe durch die Merkmale des Patentanspruchs 1.

Erfindungsgemäß ist zunächst erkannt worden, dass die eingangs genannte Aufgabe in überraschend einfacher Weise dadurch gelöst werden kann, dass das gesamte Tubusgehäuse relativ zum Mikroskop bewegt wird. Die Relativbewegung des Tubusgehäuses findet in einer Richtung parallel zu der vorgegebenen Ebene statt. Üblicherweise ist die vorgegebene Ebene horizontal ausgerichtet, so dass durch die Relativbewegung unmittelbar der Abstand der Bedienerschnittstelle zum Mikroskopstativ in horizontaler Richtung, ganz allgemein in einer vorgegebenen Richtung verändert werden kann.

Der von der Adaptionsschnittstelle kommende Lichtstrahl wird mit Hilfe der Strahlumlenkeinheit zunächst derart umgelenkt, dass seine optische Achse zumindest bereichsweise im Wesentlichen in der vorgegebenen Ebene verläuft. Die im Tubus vorgesehenen weiteren Strahlführungsmittel führen den in der vorgegebenen Ebene verlaufenden Strahl dann zu der Bedienerschnittstelle. Bei der Relativbewegung des Tubusgehäuses in einer Richtung parallel zu der vorgegebenen Ebene werden die weiteren Strahlführungsmittel in gleicher Weise bewegt, so dass sich bei der Relativbewegung des Tubusgehäuses die länge der Strecke verändert, die der Lichtstrahl in der vorgegebenen Ebene zurücklegt.

Wie bereits weiter oben angedeutet, ist die vorgegebene Ebene im Wesentlichen parallel zu einer Tubuswechselfläche oder parallel zu einer oberen Gehäusefläche des Mikroskops oder im Wesentlichen horizontal angeordnet. Üblicherweise ist die obere Gehäusefläche des Mikroskops horizontal ausgebildet, so dass in diesem Fall die Relativbewegung des Tubusgehäuses zum Mikroskop ebenfalls in horizontaler Richtung erfolgt. Falls die obere Gehäusefläche des Mikroskops, beispielsweise aus konstruktiven Gründen, eine Neigung relativ zur horizontalen Ebene aufweist, könnte die Relativbewegung des Tubusgehäuses zum Mikroskop ebenfalls in Richtung der geneigten Gehäusefläche des Mikroskops erfolgen.

Zur konstruktiven Realisierung der Relativbewegung des Tubusgehäuses zum Mikroskop sind Führungsmittel vorgesehen, mit denen die Bewegung zumindest eines Teils des Tubusgehäuses geführt ist. In diesem Zusammenhang ist das Tubusgehäuse unter Umständen aus zwei Teilen bestehend aufgebaut. Der eine Teil ist ortsfest relativ zur Adaptionsschnittstelle des Mikroskops ausgebildet, wohingegen der andere Teil des Tubusgehäuses die Relativbewegung ausführt. Die Führungsmittel sind vorzugsweise formschlüssig ausgebildet, so beispielsweise eine entsprechend ausgebildete Schwalbenschwanzführung. Vorzugsweise sind die Führungsmittel am Tubusgehäuse selbst angeordnet, so dass der erfindungsgemäße Tubus auch an bereits installierten Mikroskopen nachträglich adaptiert werden kann. Insoweit ist in vorteilhafter Weise der erfindungsgemäße Tubus - eine entsprechende Schnittstelle voausgesetzt- zu sämtlichen Mikroskopstativen kompatibel.

Im Konkreten ist vorgesehen, dass die Relativbewegung des Tubusgehäuses zum Mikroskop in einer Richtung erfolgt, die vom Bediener weg oder zum Bediener hin gerichtet ist. Hierdurch wird der Situation Rechnung getragen, dass verschiedene Mikroskopbediener üblicherweise einen unterschiedlichen Abstand zum Mikroskop einnehmen und dennoch eine ergonomische Einstellung der Bedienerschnittstelle vornehmen können.

Der von einem Mikroskopobjektiv des Mikroskops kommende Lichtstrahl weist üblicherweise die Form eines sogenannten Unendlich-Strahls auf. Hierbei handelt es sich um eine im Wesentlichen kollimierte Strahlform, die jedoch leicht divergiert. Die leichte Divergenz ist darauf zurückzuführen, dass das von jedem Objektpunkt ausgehende Licht durch das Mikroskopobjektiv in einen kollimierten Einzellichtstrahl umgewandelt wird. Da dies für jeden Objektpunkt in der Objektebene des Mikroskopobjektivs gilt, ergeben sich über die gesamte Mikroskopobjektivpupille hinweg kollimierte Einzellichtstrahlen, die in ihrer Ausbreitungsrichtung relativ zueinander und - insbesondere für im Feld verlaufende Einzellichtstrahlen - bezüglich zur optischen Achse leicht divergieren. Mit zunehmender Entfernung von dem Mikroskopobjektiv wird der Strahldurchmesser aufgrund dieser Strahldivergenz stets größer, so dass bei im Wesentlichen unveränderter Strahlform eine kompakte Bauweise des Tubus nicht möglich wäre. Im Folgenden wird mit Lichtstrahl die Gesamtheit sämtlicher von der Mikroskopobjektivpupille verlaufenden Einzellichtstrahlen bezeichnet.

Daher ist zwischen der Adaptionsschnittstelle und der Strahlumlenkeinheit eine Linseneinrichtung vorgesehen, die vorzugsweise eine positive Brechkraft aufweist und einen vom Mikroskop kommenden im Wesentlichen kollimierten Lichtstrahl in einen konvergierenden Lichtstrahl umwandelt. Hierdurch weist der im Tubus verlaufende Lichtstrahl jedenfalls keine Divergenz mehr auf, so dass in vorteilhafter Weise eine kompakte Bauweise des Tubus erzielbar ist und kleinere optische Bauteile verwendet werden können, zum Beispiel für die weiteren Strahlführungsmittel. Die Brechkraft der Linseneinrichtung ist demgemäß zumindest derart ausgeführt, dass der im Tubus verlaufende Lichtstrahl gerade nicht mehr divergiert.

In einer konkreten Ausführungsform ist vorgesehen, dass in dem Bereich, in dem der von der Strahlumlenkeinheit umgelenkte Lichtstrahl in der vorgegebenen Ebene verläuft, eine weitere Linseneinrichtung vorgesehen ist. Die weitere Linseneinrichtung weist eine Linse oder Linsengruppe mit negativer Brechkraft und eine Linse oder Linsengruppe mit positiver Brechkraft auf. Die beiden Linsen sind derart konfiguriert und angeordnet, dass zwischen den Linsen ein im Wesentlichen kollimierter Lichtstrahl verläuft. Da eine Relativbewegung des Tubusgehäuses zum Mikroskop die Länge der Strecke des in der vorgegebenen Ebene verlaufenden Lichtstrahls verändert, ist durch die vorgesehene weitere Linseneinrichtung sichergestellt, dass zumindest in diesem Bereich ein kollimierter Lichtstrahl vorliegt und sich demgemäß ein mögliches Zwischenbild und damit auch ein Bild im Okular aufgrund der Relativbewegung nicht verändert. Die Linse mit positiver Brechkraft führt die Relativbewegung zusammen mit dem Tubusgehäuse aus. Dies könnte beispielsweise dadurch erreicht werden, dass die Linse mit positiver Brechkraft am Tubusgehäuse ortsfest angeordnet ist. Die Linse mit negativer Brechkraft hingegen könnte beispielsweise an einer Baugruppe angeordnet sein, an der auch die bezogen zum Mikroskop ortsfest angeordnete Strahlumlenkeinheit befestigt ist. Somit ändert sich bei einer Relativbewegung des Tubusgehäuses der Abstand der beiden Linsen der weiteren Linseneinrichtung entsprechend.

In einer ganz besonders bevorzugten Ausführungsform könnte die zwischen der Adaptionsschnittstelle und der Strahlumlenkeinheit angeordnete Linseneinrichtung mit positiver Brechkraft bewegbar angeordnet sein. Hierbei wäre die Relativbewegung des Tubusgehäuses zum Mikroskop mit einer Bewegung der Linseneinrichtung zwangszukoppeln. So könnte die Linseneinrichtung mit positiver Brechkraft dem Betrag nach um die gleiche Strecke bewegt werden wie das Tubusgehäuse dem Betrag nach relativ zum Mikroskop bewegt wird. Durch diese Maßnahme wird erreicht, dass trotzt der Relativbewegung des Tubusgehäuses zum Mikroskop ab der bewegbar angeordneten Linseneinrichtung die Länge des optischen Strahlengangs im Tubus unverändert bleibt. Falls eine bewegbar angeordnete Linseneinrichtung vorgesehen ist, ist übrigens keine, in dem Bereich, in dem der von der Strahlumlenkeinheit umgelenkte Lichtstrahl in der vorgegebenen Ebene verläuft, angeordnete weitere Linseneinrichtung erforderlich.

Die Zwangskopplung zwischen der Bewegung der Linseneinrichtung und der Relativbewegung des Tubusgehäuses zum Mikroskop ist in einer besonders bevorzugten Ausführungsform durch Kopplungsmittel vorgesehen. Die Kopplungsmittel könnten beispielsweise formschlüssig ineinandergreifende komplementäre Elemente umfassen. Als Elemente könnten mindestens ein Zahnrad und mindestens eine Zahnstange vorgesehen sein, wobei das eine Element relativ zum Mikroskop ortsfest angeordnet und das andere Element dem Tubusgehäuse und/oder der Linseneinheit zugeordnet ist.

Im Konkreten sind zwei auf einer Achse versetzt zueinander angeordnete Zahnräder vorgesehen, die ortsfest an einer Baugruppe des Tubus angeordnet sind, die sich bei einer Relativbewegung des Tubusgehäuses zum Mikroskop nicht mitbewegt. Eine in das erste Zahnrad eingreifende Zahnstange könnte beispielsweise an dem Tubusgehäuse befestigt sein, so dass bei einer Relativbewegung des Tubusgehäuses zum Mikroskop durch die Zahnstange das erste Zahnrad bewegt wird. Eine zweite Zahnstange könnte in das zweite Zahnrad eingreifen und an der bewegbar angeordneten Linseneinheit befestigt sein. Das aufgrund der Relativbewegung des Tubusgehäuses gedrehte erste Zahnrad bewegt über die Achse das zweite Zahnrad die weitere Zahnstange und damit die bewegbar angeordnete Linseneinheit in der einfachsten Form um die gleiche Strecke.

In einer konkreten Ausführungsform erfolgt die Bewegung der Linseneinheit im Wesentlichen in einer Richtung senkrecht zur vorgegebenen Ebene. Falls also die vorgegebene Ebene horizontal angeordnet ist, erfolgt die Bewegung der Linseneinheit in vertikaler Richtung. Wenn dann das Tubusgehäuse vom Mikroskopbediener weg bewegt wird, also in Richtung der dem Bediener abgewandten Seite des Mikroskops, wird durch die Zwangskopplung die Linseneinheit in vertikaler Richtung nach oben bewegt.

Im Konkreten umfassen die weiteren Strahlführungsmittel ein Bauernfeindprisma, in dem vorzugsweise der von der Strahlumlenkeinheit kommende Lichtstrahl zweimal reflektiert wird. Ein Bauernfeindprisma ist ein optisches Bauteil, das zwei interne Reflexionen auf geringstem Volumen realisiert. Zwei Reflexionen in einem Bauteil ist deshalb von Vorteil, weil im Tubus vorzugsweise nur eine gerade Anzahl von Reflexionen - d.h. 0, 2, 4, ... - vorgesehen sein müssen, um dem Mikroskopdiener ein ihm vertrautes - seitenrichtiges - Mikroskopbild zur Verfügung stellen zu können. Somit führt dieses Bauteil keine ungerade Anzahl von Reflexionen in den optischen Strahlgang ein. Insoweit ist hierdurch in vorteilhafter Weise eine kompakte Bauweise des erfindungsgemäßen Tubus möglich.

Im Konkreten könnte so der vom Mikroskopobjektiv bzw. von der Adaptionsschnittstelle vertikal verlaufende Lichtstrahl von der Strahlumlenkeinheit um 90 Grad umgelenkt werden. Dieser umgelenkte Lichtstrahl durchläuft sodann das der Strahlumlenkeinheit nachgeordnete Bauernfeindprisma, wobei hierbei der Lichtstrahl im Bauernfeindprisma zweimal reflektiert wird.

In einer ganz besonders bevorzugten Ausführungsform umfassen die weiteren Strahlführungsmittel eine Strahlteilereinrichtung, mit der zumindest ein Teil des von der Adaptionsschnittstelle kommenden Lichtstrahls zu einer Dokumentationseinheit und/oder zu einem Detektor abteilbar ist. Diese Strahlteilereinrichtung könnte beispielsweise in Form einer strahlteilenden Platte ausgeführt sein. Vorzugsweise umfasst die Strahlteilereinrichtung das Bauernfeindprisma und ein Prisma, wobei das Prisma an dem Bauernfeindprisma aufgekittet ist. Üblicherweise wird in dem Bereich der Verbindungsstelle des Bauernfeindprismas und des Prismas eine Beschichtung aufgebracht, die ein vorgebbares Teilungsverhältnis zwischen dem zur Dokumentationsschnittstelle abgeteilten Lichtstrahl und dem zur Bedienerschnittstelle geleiteten Lichtstrahl aufweist. So könne beispielsweise ein Teilungsverhältnis von 1:1 realisiert werden. So umfasst in diesem Beispiel die Strahlteilreinrichtung das Bauernfeindprisma, die Beschichtung und das Prisma. Die Dokumentationseinheit könnte beispielsweise am Tubusgehäuse befestigt sein und somit ebenfalls bei einer Relativbewegung des Tubusgehäuses zum Mikroskop bewegt werden.

Bei manchen Applikationen ist es erforderlich, das gesamte, vom Objekt kommende Licht zum Auge des Mikroskopbedieners zu leiten. Andererseits kann es ebenfalls erforderlich sein, das gesamte, vom Objekt kommende Licht einer Dokumentationsschnittstelle bzw. einer CCD-Kamera zuzuleiten, insbesondere für Applikationen geringer Objektlichtintensität, z.B. die Fluoreszenzmikroskopie. Für diese Fälle ist in einer konkreten Ausführungsform vorgesehen, dass die Strahlteilereinrichtung aus ihrer Wirkstellung verbringbar ist.

Falls die Strahlteilereinrichtung aus ihrer Wirkstellung verbracht wird, wird an dessen Stelle ein anderes Umlenkelement eingebracht, das den Lichtstrahl entweder zur Dokumentationsschnittstelle oder zur Bedienerschnittstelle des Tubus leitet. Ein erneutes Einbringen der Strahlteilereinrichtung in ihre Wirkstellung ist ebenfalls vorgesehen, um nämlich wieder einen Teil des Lichtstrahls in Richtung der Dokumentationsschnittstelle und den anderen Teil des Lichtstrahls in Richtung der Bedienerschnittstelle abzuteilen bzw. zu leiten. Im Konkreten könnte das Verbringen der Strahlteilereinrichtung durch einen Magazinschieber erfolgen, der beispielsweise bei klassischen Mikroskoptuben eingesetzt wird.

Nun könnte es erforderlich sein, dass der erfindungsgemäße Tubus nicht nur in einer Richtung parallel zu der vorgegebenen Ebene bewegbar ist, sondern dass auch die Bedienerschnittstelle drehbar angeordnet ist, um z.B. unter anderem die vertikale Position der Bedienerschnittstelle zu verändern. In diesem Fall könnte die Bedienerschnittstelle um eine Drehachse drehbar oder schwenkbar angeordnet sein, wobei die Drehachse senkrecht zur optischen Achse eines im Tubus verlaufenden Lichtstrahls angeordnet ist. Diese diesbezügliche Drehachse ist üblicherweise senkrecht zur optischen Achse des Lichtstrahls angeordnet, der von einem Mikroskopobjektiv des Mikroskops in Richtung des Tubus verläuft. Zusätzlich könnte die Drehachse der Bedienerschnittstelle senkrecht zur optischen Achse des Lichtstrahls angeordnet sein, der in dem dem Bediener zugewandten Teil des Tubus verläuft.

Somit ist als Bedienerschnittstelle im Sinne der hier vorliegenden Erfindung der Teil des Tubus gemeint, der zum Einblick durch den Mikroskopbediener dient. Aufgrund der drehbar angeordneten Bedienerschnittstelle ist in vorteilhafter Weise ein ergonomisches Arbeiten mit dem Mikroskop möglich, da der Drehwinkel benutzerspezifisch einstellbar ist und somit die Einblickhöhe des Tubus auf den jeweiligen Benutzer anpassbar ist. Zusammen mit der Relativbewegung des Tubus parallel zu der vorgegebenen Ebene sind somit genügend Freiheitsgrade zur individuellen Benutzereinstellung gegeben.

Zur Realisierung der Drehung der Bedienerschnittstelle ist vorgesehen, dass die weiteren Führungsmittel eine um die Drehachse der Bedienerschnittstelle drehbar angeordnete Strahlumlenkeinheit aufweisen. Grundsätzlich ist die drehbar angeordnete Strahlumlenkeinheit in Form eines Spiegels ausgebildet. Eine Drehung der Bedienerschnittstelle ist mit einer Drehung der drehbar angeordneten Strahlumlenkeinheit zwangsgekoppelt. Letztendlich verläuft der von der Adaptionsschnittstelle kommende Lichtstrahl bis zur drehbar angeordneten Strahlumlenkeinheit - bis auf die Relativbewegung des Tubusgehäuses zum Mikroskop - ortsfest. Ab der drehbar angeordneten Strahlumlenkeinheit bis hin zur Bedienerschnittstelle dreht bzw. schwenkt der Lichtstrahl bei einer Drehung der Bedienerschnittstelle mit. Dementsprechend ist die drehbar angeordnete Strahlumlenkeinheit ebenfalls mit zu drehen.

Im Konkreten ist vorgesehen, dass bei einer Drehung der Bedienerschnittstelle um einen vorgebbaren Winkel eine Drehung der drehbar angeordneten Strahlumlenkeinheit um den halben Winkel erfolgt. Mit anderen Worten wird beispielsweise die drehbar angeordnete Strahlumlenkeinheit um 22,5 Grad gedreht, wenn die Bedienerschnittstelle um 45 Grad gedreht wird. Diese Zwangskopplung zwischen Bedienerschnittstelle und drehbar angeordneter Strahlumlenkeinheit könnte beispielsweise mit einem Getriebe- oder Zahnradsystem erzielt werden, das ein entsprechendes Untersetzungsverhältnis aufweist.

In einer weiteren Ausführungsform ist eine Baugruppe des Tubus teleskopierbar bzw. ausziehbar ausgestaltet. Hierzu könnte beispielsweise eine Teleskop-Linseneinrichtung vorgesehen sein, die in Form einer bildumkehrenden Tubuslinse ausgeführt sein könnte. Die Teleskop-Linseneinrichtung weist zwei Linsen auf, zwischen denen ein Unendlich-Strahlengang vorliegt. Die teleskopierbare Baugruppe könnte eine der Linsen und die Bedienerschnittstelle umfassen. Am Tubusgehäuse könnte die andere Linse ortsfest angeordnet sein. Durch das Ausziehen bzw. das Einschieben der Baugruppe wird der Abstand der beiden Linsen der Teleskop-Linseneinrichtung variiert. Vorzugsweise ist die Baugruppe in Richtung der optischen Achse des in der Baugruppe verlaufenden Lichtstrahls teleskopierbar. Zusätzliche, den Lichtstrahl umlenkende Elemente sind somit in vorteilhafter Weise nicht erforderlich. Aufgrund des bewegbaren Tubusgehäuses, der teleskopierbaren Baugruppe in Verbindung mit der drehbar angeordneten Bedienerschnittstelle ist der erfindungsgemäße Tubus in ganz besonders vorteilhafter Weise individuell auf die Bedürfnisse eines Bedieners einstellbar.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung eines ersten Ausführungsbeispiels eines erfindungsgemäßen Tubus zur Adaption an ein Mikroskop in einer seitlichen Schnittbildansicht,
- Fig. 2: eine schematische Darstellung einer Seitenansicht des Tubus zur Adaption an ein Mikroskop aus Fig. 1,
- Fig. 3: eine schematische Darstellung eines zweiten Ausführungsbeispiels eines erfindungsgemäßen Tubus zur Adaption an ein Mikroskop in einer seitlichen Schnittbildansicht,
- Fig. 4: eine schematische Darstellung eines Ausschnitts eines weiteren Ausführungsbeispiels in einer seitlichen Schnittbildansicht und
- Fig. 5: eine schematische Darstellung eines weiteren Ausführungsbeispiels der hier vorliegenden Erfindung in einer seitlichen Schnittbildansicht.

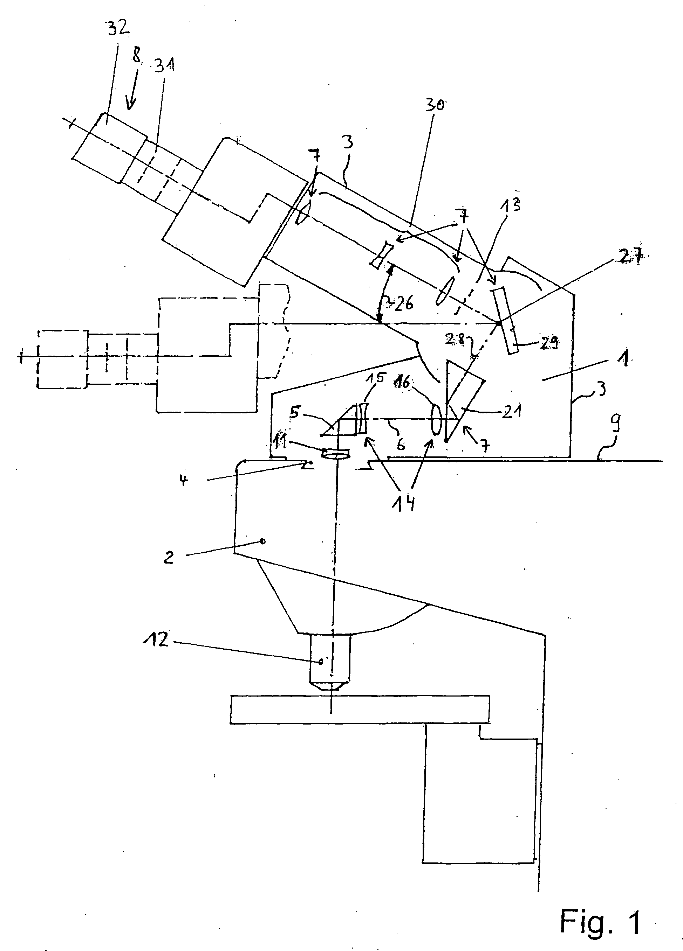

Die Fig. 1 bis 3 und 5 zeigen einen Tubus 1 zur Adaption an ein aufrechtes Mikroskop 2. Der Tubus 1 umfasst ein Tubusgehäuse 3 sowie eine Adaptionsschnittstelle 4, mit der das Tubusgehäuse 3 am Mikroskop 2 adaptierbar ist. Im Tubus 1 ist eine Strahlumlenkeinheit 5 vorgesehen, die einen von der Adaptionsschnittstelle 4 kommenden Lichtstrahl derart umlenkt, dass dessen optische Achse 6 zumindest bereichsweise in einer vorgegebenen Ebene verläuft. Die vorgegebene Ebene ist horizontal und senkrecht zur Zeichenebene angeordnet. Im Tubus 1 sind weitere Strahlführungsmittel 7 vorgesehen, die den von der Strahlumlenkeinheit 5 umgelenkten Lichtstrahl zu der Bedienerschnittstelle 8 führen.

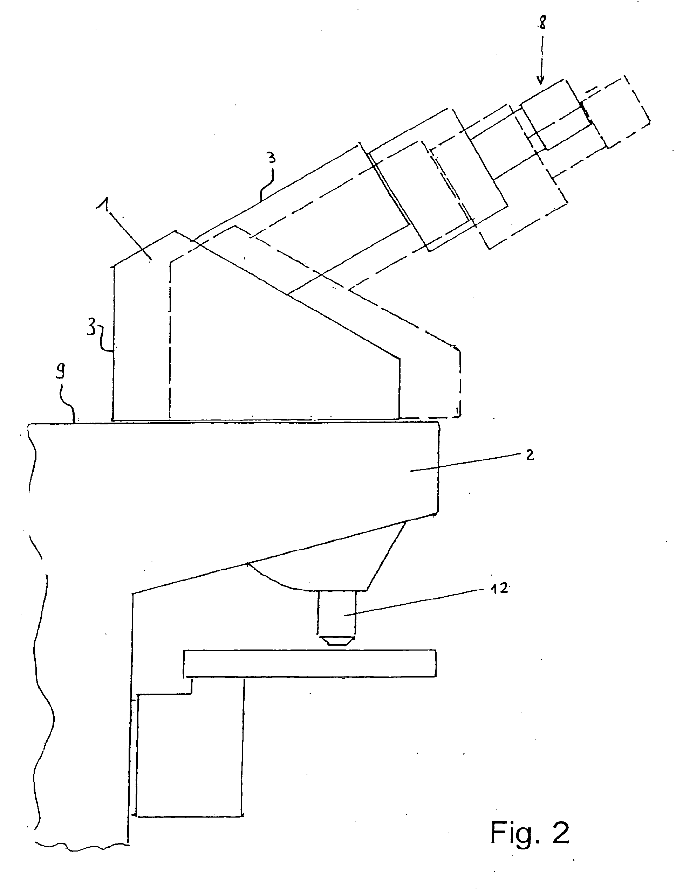

In Fig. 2 ist gezeigt, dass erfindungsgemäß eine Relativbewegung des Tubusgehäuses 3 zum Mikroskop 2 vorgesehen ist, wobei die Relativbewegung in einer Richtung parallel zu der vorgegebenen Ebene erfolgt. Von der Relativbewegung des Tubusgehäuses 3 mit umfasst sind die weiteren Strahlführungsmittel 7 und die Bedienerschnittstelle 8.

Die vorgegebene Ebene ist parallel zu der oberen Gehäusefläche 9 horizontal angeordnet. Dementsprechend erfolgt die Relativbewegung des Tubusgehäuses 3 zum Mikroskop 2 entlang der Richtung des in Fig. 2 gezeigten Doppelpfeils 10, also entweder vom Bediener weg oder zum Bediener hin.

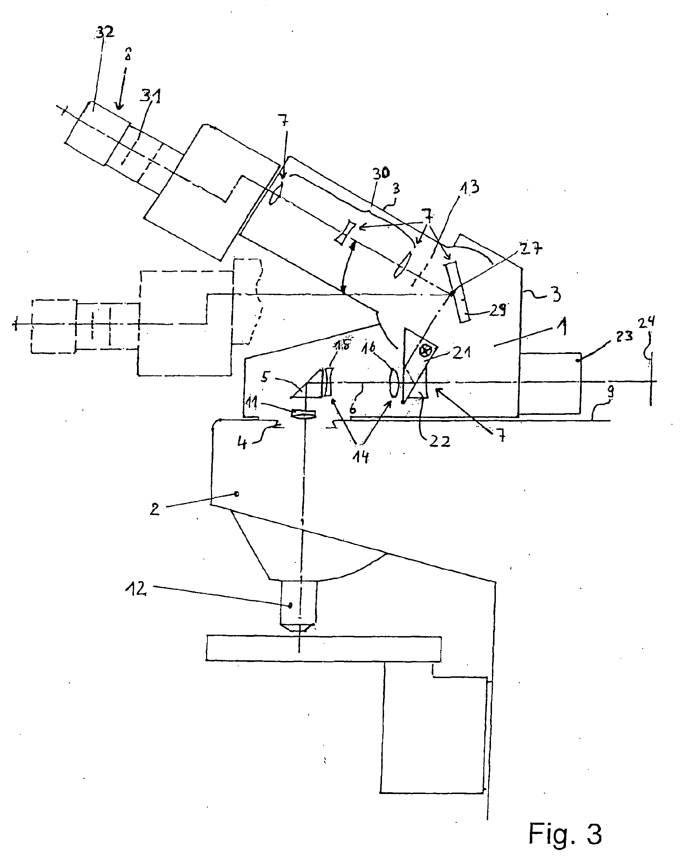

Den Fig. 1 und 3 ist entnehmbar, dass zwischen der Adaptionsschnittstelle 4 und der Strahlumlenkeinheit 5 eine Linseneinrichtung 11 vorgesehen ist. Die Linseneinrichtung 11 weist eine positive Brechkraft auf und wandelt einen vom Mikroskop 2 bzw. vom Mikroskopobjektiv 12 kommenden, im Wesentlichen kollimierten Lichtstrahl in einen konvergierenden Lichtstrahl um. Mit der Linseneinrichtung 11 wird ein Zwischenbild 13 erzeugt.

In den Fig. 1 und 3 ist gezeigt, dass in dem Bereich, im dem der von der Strahlumlenkeinheit 5 umgelenkte Lichtstrahl in der vorgegebenen Ebene verläuft, eine weitere Linseneinrichtung 14 vorgesehen ist. Die weitere Linseneinrichtung 14 umfasst eine Linse 15 mit negativer Brechkraft und eine Linse 16 mit positiver Brechkraft. Beide Linsen 15, 16 sind derart konfiguriert und angeordnet, dass zwischen den Linsen 15, 16 ein im Wesentlichen kollimierter Lichtstrahl verläuft. Bei einer Relativbewegung des Tubusgehäuses 3 zum Mikroskop 2 führt die Linse 16 mit positiver Brechkraft die Relativbewegung ebenfalls aus. Somit verändert sich bei einer Relativbewegung der Abstand der beiden Linsen 15, 16 entsprechend. Bei einer Relativbewegung des Tubusgehäuses 3 der in den Fig. 1 und 3 gezeigten Ausführungsbeispiele werden bis auf die Adaptionsschnittstelle 4, die Strahlumlenkeinheit 5 und die Linse 15 sämtliche weiteren Bauteile ebenfalls bewegt. Da jedoch zwischen den beiden Linsen 15, 16 ein im Wesentlichen kollimierter Lichtstrahl verläuft, also ein sogenannter Unendlich-Strahl vorliegt, ändert sich an dem von der Linseneinrichtung 11 erzeugten Zwischenbild 13 und damit auch an dem in der Bedienerschnittstelle 8 erzeugten Bild nichts, lediglich die Pupillenlage wird durch die Relativbewegung verändert.

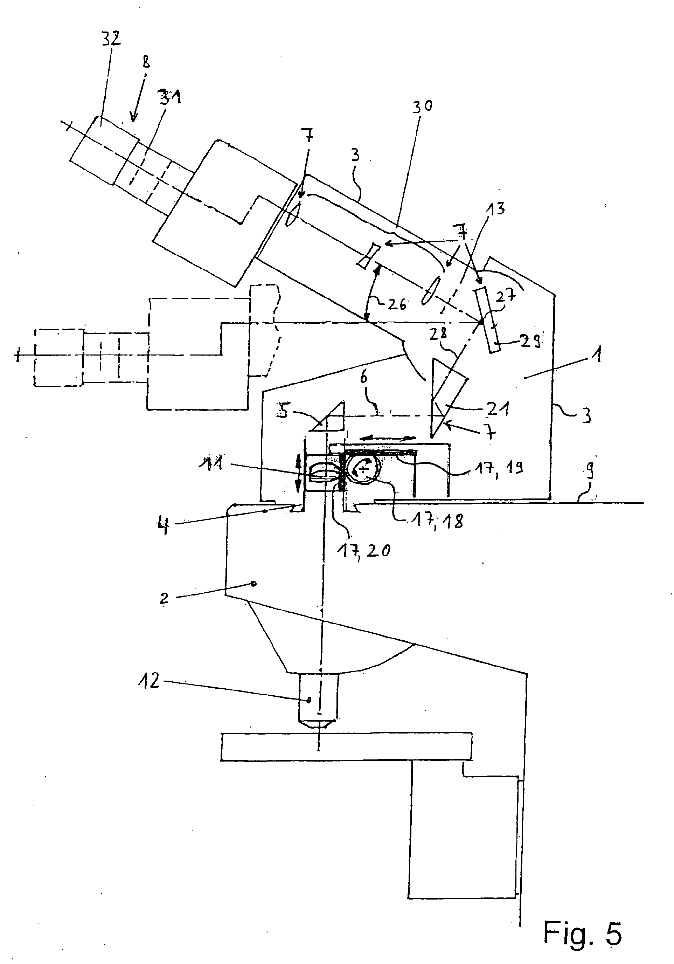

In dem in Fig. 5 gezeigten Ausführungsbeispiel ist die Linseneinrichtung 11 mit positiver Brechkraft bewegbar angeordnet. Die Bewegung der Linseneinrichtung 11 ist mit der Relativbewegung des Tubusgehäuses 3 zum Mikroskop 2 zwangsgekoppelt. Aufgrund der Zwangskopplung wird die Linseneinrichtung 11 mit positiver Brechkraft dem Betrag nach um die gleiche Strecke bewegt wie das Tubusgehäuse 3 dem Betrag nach relativ zum Mikroskop 2 bewegt wird. Hierdurch liegt das von der bewegbar angeordneten Linseneinrichtung 11 erzeugte Zwischenbild 13 stets an der gleichen Stelle.

Zur Zwangskopplung der Bewegung der Linseneinrichtung 11 mit der Relativbewegung des Tubusgehäuses 3 zum Mikroskop 2 sind Kopplungsmittel 17 vorgesehen, wobei es sich bei den Kopplungsmitteln 17 einerseits um zwei Zahnräder 18 und andererseits um jeweils eine Zahnstange 19, 20 handelt. Die Zahnräder 18 sind hierbei ortsfest relativ zur Adaptionsschnittstelle 4 beziehungsweise zum Mikroskop 2 auf einer Achse angeordnet. Die lediglich schematisch angedeutete Zahnstange 19 ist ortsfest zum Tubusgehäuse 3 angeordnet. Die ebenfalls lediglich schematisch angedeutete Zahnstange 20 ist ortsfest an der bewegbar angeordneten Linseneinrichtung 11 angeordnet, jedoch nicht in der gleichen Zeichenebene. Falls nun das Tubusgehäuse 3 vom Bediener weg bewegt wird, wird aufgrund des Eingriffs der Zahnstange 19 in das erste Zahnrad 18 - in der in Fig. 5 gezeigten Ansicht - das erste Zahnrad 18 rechts herum gedreht. Dies wiederum bewirkt aufgrund der Übertragung der Drehbewegung des ersten Zahnrads 18 über die Achse auf das zweite Zahnrad und dessen Eingriff in die Zahnstange 20 eine Aufwärtsbewegung der Linseneinrichtung 11. Die in Fig. 5 ausführbare Relativbewegung des Tubusgehäuses 3 zum Mikroskop 2 erfolgt parallel zur horizontalen Ebene, die Bewegung der Linseneinheit 11 erfolgt im Wesentlichen senkrecht zu dieser Ebene, also in vertikaler Richtung.

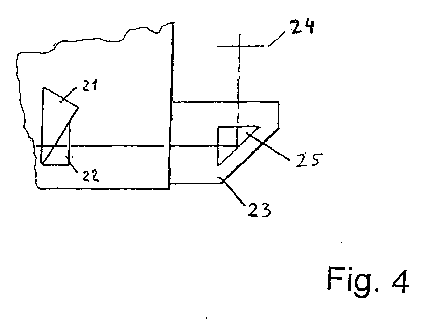

Die weiteren Strahlführungsmittel 7 umfassen ein Bauernfeindprisma 21, in dem der von der Strahlumlenkeinheit 5 kommende Lichtstrahl zweimal intern reflektiert wird, was in den Fig. 1, 3 und 5 schematisch angedeutet ist. Fig. 3 ist entnehmbar, dass die weiteren Strahlführungsmittel 7 eine Strahlteilereinrichtung umfassen, die aus dem Bauernfeindprisma 21 und einem Prisma 22 besteht. Zwischen Bauernfeindprisma 21 und dem Prisma 22 ist eine nicht gezeigte Beschichtung des Bauernfeindprismas 21 vorgesehen, die ein Teilungsverhältnis von 1:1 aufweist. Mit der Strahlteilereinrichtung ist ein Teil des von der Adaptionsschnittstelle 4 kommenden Lichtstrahls zu einer - in Fig. 3 nicht gezeigten - Dokumentationseinheit abteilbar. Die Linseneinrichtung 11 erzeugt auch für den Dokumentationsabgang 23 ein Zwischenbild 24. In dem Ausführungsbeispiel aus Fig. 4 ist das Zwischenbild 24 horizontal angeordnet, da der in den Dokumentationsabgang 23 eintretende Lichtstrahl von dem Umlenkprisma 25 um 90 Grad umgelenkt wird.

Die in den Fig. 1, 3 und 5 gezeigten Tuben sind jeweils in zwei unterschiedlichen Drehpositionen gezeigt. In der einen Position - gestrichelt gezeichnet - ist der größte Teil der optischen Achse des in der Bedienerschnittstelle 8 verlaufenden Lichtstrahls horizontal angeordnet und befindet sich daher in einer Winkelposition von 0 Grad. Durchgezogen gezeichnet ist die um 30 Grad gedrehte Bedienerschnittstelle 8, was mit dem Winkel 26 angedeutet ist. Die Bedienerschnittstelle ist hierbei um eine Drehachse 27 drehbar angeordnet. Die Drehachse 27 steht senkrecht zur Zeichenebene und senkrecht zur optischen Achse 28 des vom Bauernfeindprisma 21 kommenden Lichtstrahls. Die weiteren Führungsmittel 7 umfassen eine um die Drehachse 27 drehbar angeordnete Strahlumlenkeinheit 29. Eine Drehung der Bedienerschnittstelle 8 ist mit einer Drehung der drehbar angeordneten Strahlumlenkeinheit 29 zwangsgekoppelt, so dass hierdurch sichergestellt ist, dass der vom Mikroskopobjektiv 12 kommende Lichtstrahl auch bei einer Drehbewegung der Bedienerschnittstelle 8 stets zur Bedienerschnittstelle 8 geleitet wird. Die Zwangskopplung zwischen Drehbewegung der Bedienerschnittstelle 8 und der drehbar angeordneten Strahlumlenkeinheit 29 erfolgt hierbei derart, dass bei einer Drehung der Bedienerschnittstelle um den Winkel 26 die drehbar angeordnete Strahlumlenkeinheit um den halben Winkel gedreht wird.

Im Tubus 1 ist eine geradzahlige Anzahl von Reflexionen vorgesehen, wodurch sichergestellt wird, dass ein seitenrichtiges Bild entsteht. Insbesondere ist das Bauernfeindprisma 21 derart angeordnet, dass in keiner Stellung der drehbar angeordneten Strahlumlenkeinheit 29 der Winkel zwischen einfallendem und austretendem Strahl größer als 110 Grad wird.

Die Tubuslinse 30, die drei einzelne Linsen umfasst, bildet das Zwischenbild 13 in das Okularzwischenbild 31 ab, wobei die bildumkehrende Tubuslinse 30 in einem nicht eingezeichneten Rohr gefasst ist. Mit den Okularen 32 kann das Okularzwischenbild 31 betrachtet werden.

Die in Fig. 3 gezeigte Strahlteilereinrichtung bestehend aus Bauernfeindprisma 21 und Prisma 22 ist in einer Richtung senkrecht zur Zeichenebene verschiebbar angeordnet und kann in unterschiedlichen Stellungen eingerastet werden. In einer ersten Stellung ist die aus Bauernfeindprisma 21 und Prisma 22 bestehende Strahlteilereinrichtung im Strahlengang eingebracht. Diese Stellung ist in Fig. 3 gezeigt. In einer zweiten Stellung wird das gesamte Licht zur Bedienerschnittstelle 8 umgelenkt, d.h. in dieser Stellung ist lediglich ein Bauernfeindprisma 21 vorgesehen, wie es bezüglich dieses Details beispielsweise entsprechend in den Fig. 1 und 5 gezeigt ist. In der in Fig. 4 bezüglich dieses Details gezeigten dritten Stellung ist das Bauernfeindprisma 21 und ein Prisma 22 in dem Strahlengang eingebracht, wobei die gemeinsame Fläche des Bauernfeindprismas 21 und des Prismas 22 derart ausgebildet ist, dass der gesamte Lichtstrahl ohne Reflexion die beiden Bauteile passiert und zum Dokumentationsabgang 23 geleitet wird.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Tubus
- 2: Mikroskop
- 3: Tubusgehäuse
- 4: Adaptionsschnittstelle
- 5: Strahlumlenkeinheit
- 6: optische Achse des von (5) umgelenkten Lichtstrahls
- 7: weitere Strahlführungsmittel
- 8: Bedienerschnittstelle
- 9: obere Gehäusefläche von (2)
- 10: Richtung der Relativbewegung zwischen (3) und (2)
- 11: Linseneinrichtung
- 12: Mikroskopobjektiv
- 13: Zwischenbild
- 14: weitere Linseneinrichtung
- 15: Linse mit negativer Brechkraft von (14)
- 16: Linse mit positiver Brechkraft von (14)
- 17: Kopplungsmittel
- 18: zwei auf einer gemeinsamen Achse angeordnete Zahnräder
- 19: Zahnstange
- 20: Zahnstange
- 21: Bauernfeindprisma
- 22: Prisma
- 23: Dokumentationsabgang
- 24: Zwischenbild
- 25: Umlenkprisma
- 26: Winkel
- 27: Drehachse
- 28: optische Achse des von (21) kommenden Lichtstrahls
- 29: drehbar angeordnete Strahlumlenkeinheit
- 30: Tubuslinse
- 31: Okularzwischenbild
- 32: Okular

## Patentansprüche

1. Tubus zur Adaption an ein Mikroskop, mit einem Tubusgehäuse (3), einer Adaptionsschnittstelle (4), einer Strahlumlenkeinheit (5), weiteren Strahlführungsmitteln (7) und einer Bedienerschnittstelle (8), wobei mit der Strahlumlenkeinheit (5) ein von der Adaptionsschnittstelle (4) kommender Lichtstrahl derart umlenkbar ist, dass seine optische Achse (6) zumindest bereichsweise im Wesentlichen in einer vorgegebenen Ebene verläuft und von den weiteren Strahlführungsmitteln (7) zu der Bedienerschnittstelle (8) führbar ist,
**dadurch gekennzeichnet,**
**dass** Führungsmittel vorgesehen sind, mit denen eine geführte Relativbewegung des Tubusgehäuses (3) samt den weiteren Strahlführungsmitteln (7) und der Bedienerschnittstelle (8) zum Mikroskop (2) in einer Richtung (10) parallel zu der vorgegebenen Ebene ausführbar ist, wobei die vorgegebene Ebene im Wesentlichen parallel zu einer Tubuswechselfläche oder parallel zu einer oberen Gehäusefläche (9) des Mikroskops (2) oder im Wesentlichen horizontal angeordnet ist.

2. Tubus nach Anspruch 1, **dadurch gekennzeichnet, dass** die Relativbewegung zumindest eines Teils des Tubusgehäuses (3) zum Mikroskop (2) mittels Führungsmittel, in Form von formschlüssigen Mitteln geführt ist.

3. Tubus nach einem der Ansprüche 1 bis 2, **dadurch gekennzeichnet, dass** die Relativbewegung des Tubusgehäuses (3) zum Mikroskop (2) in einer Richtung (10) erfolgt, die vom Bediener weg oder zum Bediener hin gerichtet ist.

4. Tubus nach einem der Ansprüche 1 bis 3, **dadurch gekennzeichnet, dass** zwischen der Adaptionsschnittstelle (4) und der Strahlumlenkeinheit (5) eine Linseneinrichtung (11) vorgesehen ist, die vorzugsweise eine positive Brechkraft aufweist und einen vom Mikroskop (2) kommenden im Wesentlichen kollimierten Lichtstrahl in einen konvergierenden Lichtstrahl umwandelt.

5. Tubus nach Anspruch 4, **dadurch gekennzeichnet, dass** in dem Bereich, in dem der von der Strahlumlenkeinheit (5) umgelenkte Lichtstrahl in der vorgegebenen Ebene verläuft, eine weitere Linseneinrichtung (14) vorgesehen ist.

6. Tubus nach Anspruch 5, **dadurch gekennzeichnet, dass** die weitere Linseneinrichtung (14) eine Linse (15) mit negativer Brechkraft und eine Linse (16) mit positiver Brechkraft aufweist, wobei die beiden Linsen (15, 16) derart konfiguriert und angeordnet sind, dass zwischen den Linsen (15, 16) ein im Wesentlichen kollimierter Lichtstrahl verläuft.

7. Tubus nach Anspruch 6, **dadurch gekennzeichnet, dass** die Linse (16) mit positiver Brechkraft die Relativbewegung zusammen mit dem Tubusgehäuse (3) ausführt.

8. Tubus nach Anspruch 4, **dadurch gekennzeichnet, dass** die Linseneinrichtung (11) positive Brechkraft aufweist und bewegbar angeordnet ist und mit der Relativbewegung des Tubusgehäuses (3) zum Mikroskop (2) zwangsgekoppelt ist.

9. Tubus nach Anspruch 8, **dadurch gekennzeichnet, dass** die Linseneinrichtung (11) dem Betrag nach um die gleiche Strecke bewegt wird wie das Tubusgehäuse (3) dem Betrag nach relativ zum Mikroskop (2) bewegt wird.

10. Tubus nach Anspruch 8 oder 9, **dadurch gekennzeichnet, dass** zur Zwangskopplung Kopplungsmittel (17) vorgesehen sind.

11. Tubus nach Anspruch 10, **dadurch gekennzeichnet, dass** die Kopplungsmittel formschlüssig ineinandergreifende komplementäre Elemente umfassen.

12. Tubus nach Anspruch 11, **dadurch gekennzeichnet, dass** als Elemente mindestens ein Zahnrad (18) und mindestens eine Zahnstange (19, 20) vorgesehen sind, wobei das eine Element relativ zum Mikroskop ortsfest angeordnet und das andere Element dem Tubusgehäuse (3) und/oder der Linseneinheit (11) zugeordnet ist.

13. Tubus nach Anspruch 12, **dadurch gekennzeichnet, dass** die Bewegung der Linseneinheit (11) im Wesentlichen in einer Richtung senkrecht zur vorgegebenen Ebene erfolgt.

14. Tubus nach einem der Ansprüche 1 bis 13, **dadurch gekennzeichnet, dass** die weiteren Strahlführungsmittel (7) ein Bauernfeindprisma (21) umfassen, in dem vorzugsweise der von der Strahlumlenkeinheit (5) kommende Lichtstrahl zweimal reflektiert wird.

15. Tubus nach einem der Ansprüche 1 bis 14, **dadurch gekennzeichnet, dass** die weiteren Strahlführungsmittel (7) eine Strahlteilereinrichtung (21, 22) umfassen, mit der zumindest ein Teil des von der Adaptionsschnittstelle (4) kommenden Lichtstrahls zu einer Dokumentationseinheit und/oder zu einem Detektor abteilbar ist.

16. Tubus nach Anspruch 15, **dadurch gekennzeichnet, dass** die Strahlteilereinrichtung (21, 22) in und aus ihrer Wirkstellung verbringbar ist, vorzugsweise in einem Magazinschieber geführt.

17. Tubus nach einem der Ansprüche 1 bis 16, **dadurch gekennzeichnet, dass** die Bedienerschnittstelle (8) um eine senkrecht zur optischen Achse (6, 28) eines im Tubus (1) verlaufenden Lichtstrahls angeordneten Drehachse (27) drehbar oder schwenkbar angeordnet ist.

18. Tubus nach Anspruch 17, **dadurch gekennzeichnet, dass** die weiteren Strahlführungsmittel (7) eine um die Drehachse (27) der Bedienerschnittstelle (8) drehbar angeordnete Strahlumlenkeinheit (29) aufweisen und eine Drehung der Bedienerschnittstelle (8) mit einer Drehung der drehbar angeordneten Strahlumlenkeinheit (29) zwangsgekoppelt ist.

19. Tubus nach Anspruch 18, **dadurch gekennzeichnet, dass** bei einer Drehung der Bedienerschnittsteile (8) um einen vorgebbaren Winkel eine Drehung der drehbar angeordneten Strahlumlenkeinheit (29) um den halben Winkel erfolgt.

20. Tubus nach einem der Ansprüche 1 bis 19, **gekennzeichnet durch** eine teleskopierbare Baugruppe, wobei die Baugruppe vorzugsweise in Richtung der optischen Achse des in der Baugruppe verlaufenden Lichtstrahls teleskopierbar ist.

## Claims

1. Tube for adaptation onto a microscope, having a tube housing (3), an adaptation interface (4), a beam deflecting unit (5), further beam guidance means (7), and an operator interface (8), a light beam coming from the adaptation interface (4) being deflectable with the beam deflecting unit (5) in such a way that its optical axis (6) at least locally extends substantially in a predefined plane, and can be guided by the further beam guidance means (7) to the operator interface (8),
**characterized in that** guidance means are provided by means of which a guided relative motion of the tube housing (3), together with the further beam guidance means (7) and the operator interface (8), with respect to the microscope (2) can be performed in a direction (10) parallel to the predefined plane, the predefined plane being arranged substantially parallel to a tube changing surface, or parallel to an upper housing surface (9) of the microscope (2), or substantially horizontally.

2. Tube according to Claim 1, **characterized in that** the relative motion of at least one part of the tube housing (3) with respect to the microscope (2) is guided by means of guidance means, in the form of positively engaging means.

3. Tube according to either of Claims 1 or 2, **characterized in that** the relative motion of the tube housing (3) with respect to the microscope (2) is accomplished in a direction (10) that is directed away from or toward the operator.

4. Tube according to any of Claims 1 to 3, **characterized in that** there is provided, between the adaptation interface (4) and the beam deflecting unit (5), a lens device (11) which preferably has a positive refractive power and converts a substantially collimated light beam coming from the microscope (2) into a converging light beam.

5. Tube according to Claim 4, **characterized in that** a further lens device (14) is provided in the region in which the light beam deflected by the beam deflecting unit (5) runs in the predefined plane.

6. Tube according to Claim 5, **characterized in that** the further lens device (14) comprises a lens (15) having negative refractive power and a lens (16) having positive refractive power, the two lenses (15, 16) being configured and arranged in such a way that a substantially collimated light beam runs between the lenses (15, 16).

7. Tube according to Claim 6 **characterized in that** the lens (16) having positive refractive power performs the relative motion together with the tube housing (3).

8. Tube according to Claim 4, **characterized in that** the lens device (11) has positive refractive power and is arranged movably, and is constrainedly coupled to the relative motion of the tube housing (3) with respect to the microscope (2).

9. Tube according to Claim 8, **characterized in that** the lens device (11) is moved quantitatively over the same distance as the tube housing (3) is moved quantitatively relative to the microscope (2).

10. Tube according to Claim 8 or 9, **characterized in that** coupling means (17) are provided for the constrained coupling.

11. Tube according to Claim 10, **characterized in that** the coupling means encompass complementary elements engaging positively into one another.

12. Tube according to Claim 11, **characterized in that** at least one gear (18) and at least one toothed rack (19, 20) are provided as elements, the one element being arranged in stationary fashion relative to the microscope, and the other element being associated with the tube housing (3) and/or the lens unit (11).

13. Tube according to Claim 12, **characterized in that** the motion of the lens unit (11) is accomplished substantially in a direction perpendicular to the predefined plane.

14. Tube according to one of Claims 1 to 13, **characterized in that** the further beam guidance means (7) encompass a Bauernfeind prism (21) in which the light beam coming from the beam deflecting unit (5) is preferably reflected twice.

15. Tube according to one of Claims 1 to 14, **characterized in that** the further beam guidance means (7) encompass a beam splitter device (21, 22) with which at least one part of the light beam coming from the adaptation interface (4) can be split off to a documentation unit and/or to a detector.

16. Tube according to Claim 15, **characterized in that** the beam splitter device (21, 22) is conveyable into and out of its working position, preferably guided in a magazine slider.

17. Tube according to any of Claims 1 to 16, **characterized in that** the operator interface (8) is arranged pivotably or rotatably about a rotation axis (27) arranged perpendicular to the optical axis (6, 28) of a light beam running in the tube (1).

18. Tube according to Claim 17, **characterized in that** the further guidance means (7) comprise a beam deflecting unit (29) arranged rotatably about the rotation axis (27) of the operator interface (8), and a rotation of the operator interface (8) is constrainedly coupled to a rotation of the rotatably arranged beam deflecting unit (29).

19. Tube according to Claim 18, **characterized in that** upon a rotation of the operator interface (8) through a definable angle, a rotation of the rotatably arranged beam deflecting unit (29) through half that angle occurs.

20. Tube according to any of Claims 1 to 19, **characterized by** a telescopable assembly, the assembly preferably being telescopable in the direction of the optical axis of the light beam running in the assembly.

## Revendications

1. Tube à adapter sur un microscope, comprenant un boîtier de tube (3), une interface d'adaptation (4), une unité de déviation de faisceau (5), d'autres moyens de guidage de faisceau (7) et une interface utilisateur (8), l'unité de déviation de faisceau (5) permettant de dévier un faisceau de lumière provenant de l'interface d'adaptation (4) de telle sorte que son axe optique (6) s'étende au moins localement substantiellement dans un plan prédéfini et puisse être guidé par les autres moyens de guidage de faisceau (7) jusqu'à l'interface utilisateur (8), **caractérisé en ce que** des moyens de guidage sont prévus qui permettent d'effectuer un mouvement relatif guidé du boîtier de tube (3) en conjonction avec les autres moyens de guidage de faisceau (7) et l'interface utilisateur (8) par rapport au microscope (2) dans une direction (10) parallèle au plan prédéfini, le plan prédéfini étant disposé substantiellement en parallèle à une surface de changement de tube ou en parallèle à une surface de boîtier supérieure (9) du microscope (2) ou de façon substantiellement horizontale.

2. Tube selon la revendication 1, **caractérisé en ce que** le mouvement relatif au moins d'une partie du boîtier de tube (3) par rapport au microscope (2) peut être guidé au moyen de moyens de guidage sous la forme de moyens à engagement positif.

3. Tube selon la revendication 1 ou 2, **caractérisé en ce que** le mouvement relatif du boîtier de tube (3) par rapport au microscope (2) s'effectue dans une direction (10) qui s'éloigne de l'utilisateur ou qui s'approche de celui-ci.

4. Tube selon l'une quelconque des revendications 1 à 3, **caractérisé en ce qu'**entre l'interface d'adaptation (4) et l'unité de déviation de faisceau (5), un dispositif de lentille (11) est prévu qui présente de préférence une puissance réfringente positive et convertit un faisceau lumineux, substantiellement collimaté, provenant du microscope (2) en un faisceau lumineux convergent.

5. Tube selon la revendication 4, **caractérisé en ce que** dans la zone, dans laquelle le faisceau lumineux dévié par l'unité de déviation de faisceau (5) s'étend dans le plan prédéfini, un autre dispositif de lentille (14) est prévu.

6. Tube selon la revendication 5, **caractérisé en ce que** l'autre dispositif de lentille (14) présente une lentille (15) d'une puissance réfringente négative et une lentille (16) d'une puissance réfringente positive, les deux lentilles (15, 16) étant configurées et disposées de telle sorte qu'entre les lentilles (15, 16) s'étende un faisceau lumineux substantiellement collimaté.

7. Tube selon la revendication 6, **caractérisé en ce que** la lentille (16) d'une puissance réfringente positive effectue le mouvement relatif en conjonction avec le boîtier de tube (3).

8. Tube selon la revendication 4, **caractérisé en ce que** le dispositif de lentille (11) présente une puissance réfringente positive et est disposé de façon mobile et présente un couplage forcé avec le mouvement relatif du boîtier de tube (3) par rapport au microscope (2).

9. Tube selon la revendication 8, **caractérisé en ce que** le dispositif de lentille (11) est déplacé quantitativement de la même distance que le boîtier de tube (3) est déplacé quantitativement par rapport au microscope (2).

10. Tube selon la revendication 8 ou 9, **caractérisé en ce que** des moyens de couplage (17) sont prévus pour le couplage forcé.

11. Tube selon la revendication 10, **caractérisé en ce que** les moyens de couplage comprennent des éléments complémentaires, s'enclenchant en engagement positif.

12. Tube selon la revendication 11, **caractérisé en ce que** comme éléments au moins une roue dentée (18) et au moins une crémaillère (19, 20) sont prévues, l'un des éléments étant disposé de façon stationnaire par rapport au microscope et l'autre élément étant affecté au boîtier de tube (3) et/ou à l'unité de lentille (11).

13. Tube selon la revendication 12, **caractérisé en ce que** le mouvement de l'unité de lentille (11) s'effectue substantiellement dans une direction perpendiculaire au plan prédéfini.

14. Tube selon l'une quelconque des revendications 1 à 13, **caractérisé en ce que** les autres moyens de guidage de faisceau (7) comprennent un prisme à trois faces (21) dans lequel le faisceau lumineux provenant de l'unité de déviation de faisceau (5) est de préférence réfléchi deux fois.

15. Tube selon l'une quelconque des revendications 1 à 14, **caractérisé en ce que** les autres moyens de guidage de faisceau (7) comprennent un dispositif de séparation de faisceau (21, 22) qui permet de séparer au moins une partie du faisceau lumineux provenant de l'interface d'adaptation (4) en direction d'une unité de documentation et/ou d'un détecteur.

16. Tube selon la revendication 15, **caractérisé en ce que** le dispositif de séparation de faisceau (21, 22) peut être entré dans et sorti de sa position angulaire, de préférence guidé dans un chargeur à magasin.

17. Tube selon l'une quelconque des revendications 1 à 16, **caractérisé en ce que** l'interface utilisateur (8) est disposée de façon à pouvoir tourner ou pivoter autour d'un axe de rotation (27) disposé perpendiculairement à l'axe optique (6, 28) d'un faisceau lumineux s'étendant dans le tube (1).

18. Tube selon la revendication 17, **caractérisé en ce que** les autres moyens de guidage de faisceau (7) présentent une unité de déviation de faisceau (29) disposée de façon à pouvoir tourner autour de l'axe de rotation (27) de l'interface utilisateur (8) et une rotation de l'interface utilisateur (8) présente un couplage forcé avec une rotation de l'unité de déviation de faisceau (29) disposée de façon à pouvoir tourner.

19. Tube selon la revendication 18, **caractérisé en ce qu'**avec une rotation de l'interface utilisateur (8) sous un angle prédéfinissable, une rotation de l'unité de déviation de faisceau (29) disposée de façon à pouvoir tourner s'effectue d'un demi-angle.

20. Tube selon l'une quelconque des revendications 1 à 19, **caractérisé par** un sous-ensemble télescopique, dans lequel le sous-ensemble est de préférence télescopique en direction de l'axe optique du faisceau lumineux s'étendant dans le sous-ensemble.
